# EUROPEAN PATENT APPLICATION

(11) **EP 3 454 429 A2**
(43) Date of publication of application: **13.03.2019**
(21) Application number: 18193232.8
(22) Date of filing: 07.09.2018
(51) Int. Cl.: H01R 13/631, H01R 12/91, H01R 13/405, H01R 13/627

(54) **POWER CONNECTOR SYSTEMS**

(30) Priority: 07.09.2017 GB 201714433
(71) Applicant: Nidec Control Techniques Limited, Newtown, Powys SY16 3BE (GB)
(72) Inventor: OWEN, Rhys, Powys, SY16 3BE (GB)
(74) Representative: Korenberg, Alexander Tal

(57) **Abstract**

A control module connector (14) for electrically connecting a first control module to a second control module, the connector comprising a connector body having a first part (86) supporting a first connecting element (118) configured to be connectable to the first control module and a second part (86) supporting a second connecting element (120) configured to be connectable to the second control module, wherein the first and second connecting elements (118,120), are electrically connected and the connector body comprises a flexible portion (102) linking the first (86) and second (88) parts.

## Description

### Field

The present disclosure relates to systems for providing electrical power to electric machine drives.

### Background

Many applications use drive systems, in which multiple drives work together in a single machine to control multiple motors. Generally, each drive controls a single motor of the machine. Some examples of this include weaving and paper folding machines. Typically, such machines employ multiple servomotors each with a dedicated drive. Each drive controls a different motor function independently. For example, some drives may control rotating motion, some shearing motion and so on. In many applications, the drives for the individual motors are arranged together in a control box. This may be for reasons of space efficiency and/or ease of access. In general, it is desirable that such drives take as little space as possible while being able to be serviced easily.

Generally, each drive requires its own power supply for the control stage of the drive. Therefore, an external power source derived, for example, from mains power is needed to power the control components of each drive. Generally, drives operate on mains voltage and comprise a control stage and a power stage. A typical drive voltage is mains single or 3-phase between 100 and 1000V AC - this is the power that is taken in, rectified and then put out to the motor at variable amplitude and frequency. The control stage is generally operated at a voltage of less than 30V, typically 24 volts, and the power stage is generally operated at a mix of mains voltages (100-1000V) and control voltages (less than 30V). Other higher and lower voltages (AC and DC) are used according to application. This power can be fed directly from a suitable voltage source by wiring each individual drive in the machine to the source. This is done by installing multiple supply conductors for each drive and securing them to screw terminals in fixed connectors on each individual drive.

The connection of multiple wires to each individual drive in this way is time consuming, cumbersome and can result in clutter in the control box. Use of multiple wires also increases the risk of errors in wiring multiple adjacent drives which look similar, often identical, and can increase complexity of installation and maintenance.

An improved system for connecting power to multiple drives is therefore required.

### Summary

In accordance with an aspect of the disclosure there is provided a control module connector for electrically connecting a first control module to a second control module, the connector comprising a connector body having a first part supporting a first connecting element configured to be connectable to the first control module and a second part supporting a second connecting element configured to be connectable to the second control module, wherein the first and second connecting elements, are electrically connected and the connector body comprises a flexible portion linking the first and second parts.

Optionally, the flexible portion is configured to enable relative movement between the first and second connecting elements to accommodate variations in position between the control modules, such as may be caused by misalignment between modules or differences in spacing. Optionally, the variation comprises a direction parallel to the length of the connector. Optionally, the variation comprises a direction parallel to the width of the connector. Optionally, the variation comprises angular variations. Optionally, the flexible portion has a concertina structure.

Optionally, the first and second connecting elements are electrically connected by a conductive element comprising a flexible part coincident with the flexible portion of the body. Optionally, the flexible part is substantially at the centre of the conductive element. Optionally, the conductive element is generally flat and the flexible part comprises a bend. The body is preferably moulded from a semi-rigid plastics material that is able to support the connecting elements but also to flex in the region of the flexible portion. The flexible part is preferably embedded with the flexible portion.

Optionally, the first and second connecting elements each comprise a latch element for holding the connector in place in one of the control modules. Optionally, the first and second connecting elements each comprise a casing part and at least one electrical connection within the casing part. Optionally, the control module connector further comprises a protruding pull tab for manual removal of the connector once installed.

Also disclosed is an assembly of control modules comprising at least first and second control modules arranged in a side-by-side relationship, and each formed to receive a first or second connecting element of a control module connector to transfer power between the modules.

Also disclosed is a power socket for a control module, the power socket comprising a casing, first and second sockets disposed in the casing, the first and second connectors configured to receive and/or transmit electrical power and at least one electrical conductor between the first and second sockets for transmitting electrical power between the first and second sockets.

Optionally, the first socket comprises first and second electrical connectors and the second socket comprises third and fourth electrical connectors. Optionally, the at least one electrical conductor comprises first and second electrical conductors, the first electrical conductor electrically connects the first and third electrical connectors and the second electrical conductor electrically connects the second and fourth electrical connectors. Optionally, the first and third electrical connectors are configured to be operated a lower electrical potential than the second and fourth electrical connectors.

Optionally, the first and second sockets have a cross-sectional profile in a plane perpendicular to the principal axis of the sockets, such that a device to be received in the socket can only be inserted in one orientation. Optionally, the first and second sockets are configured to receive a power supply apparatus. Optionally, the first and second sockets are configured to receive a power output apparatus. Optionally, the first and second sockets each comprise at least one slot for receiving a corresponding locating element of a received apparatus.

Optionally, in use, the first socket receives electrical power from an external source and the second socket supplies electrical power to an external apparatus. Optionally, the electrical conductor is configured to transmit electrical power to a PCB of the control module. Optionally, the casing is made of a moulded plastics material.

### Brief Description of the Drawings

Exemplary embodiments of the disclosure shall now be described with reference to the drawings in which:
Figure 1 shows a schematic view of an assembly of drives and a power supply system according to the disclosure;
Figure 2 shows a power socket for a drive according to the disclosure;
Figure 3 shows a schematic, cross-sectional view of the power socket;
Figure 4 shows a power supply device according to the disclosure;
Figure 5 shows a schematic view of the power supply device;
Figure 6 shows a connector according to the disclosure;
Figure 7 shows a schematic, cross-sectional view of the connector;
Figures 8A to 8D show different configurations for electrically conductive elements of the connector; and
Figures 9A to 9C show schematic views of alternative configurations of an assembly of drives and a power supply system according to the disclosure.

Throughout the description and the drawings, like reference numerals refer to like parts.

### Specific Description

In an installation where a number of drives are assembled in a single machine control box, it is desirable to reduce the space taken up by the individual drives and to minimise the amount of cabling inside the control box. This can be achieved by connecting a power supply to a first drive, connecting the first drive to a second drive, connecting the second drive to a third drive (and so on), and transmitting power across all the drives in a daisy-chain fashion. The drives are serially connected and power is tapped off by each in the chain.

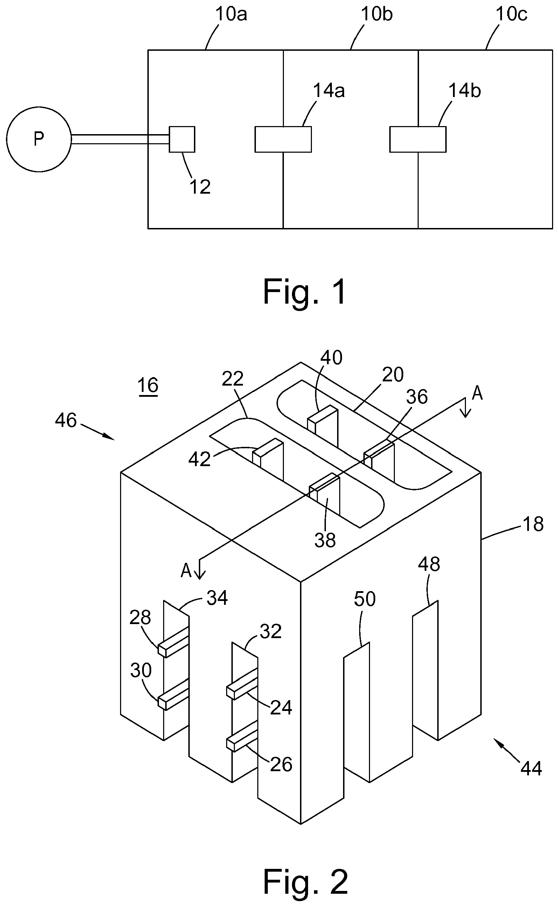

Figure 1 shows an example configuration for an assembly of drives. The drives may be servomotor controllers. The structure and function of servomotor controllers are known in the art and will not be described in detail here. This disclosure is not limited to a controller for a servomotor. It could be employed in the control of any kind of electric motor and drive types in the same application. A typical application is described below.

Each drive has a control stage with a printed circuit board (PCB). Each PCB processes control signals to control a motor associated with the drive. The assembly may be contained in a single machine control box. The configuration allows electrical power to be shared across the drives. In this way, a PCB of the control stage of each drive can receive power without the need for an individually arranged power supply.

In Figure 1, three drives 10a-c are arranged alongside each other. The drives 10 are modular in their arrangement in that they are physically of the same dimension or multiples of a base dimension and can be mounted closely stacked and are interchangeable in terms of their location in the stack. The first drive 10a is connected to an external power source P. This connection is provided by a power supply plug 12 connected to the external power source P and plugged into the first drive 10a, as will be explained below. A first connector 14a is plugged into the first drive 10a and the second drive 10b, as will be explained below. A second connector 14b is plugged into the second drive 10b and the third drive 10c. In this way, power may be supplied from the external power source P, via the power supply plug 12 and the connectors 14a-b, to a PCB of each of the drives 10a-c. The chain could continue within allowable resistance and current limits.

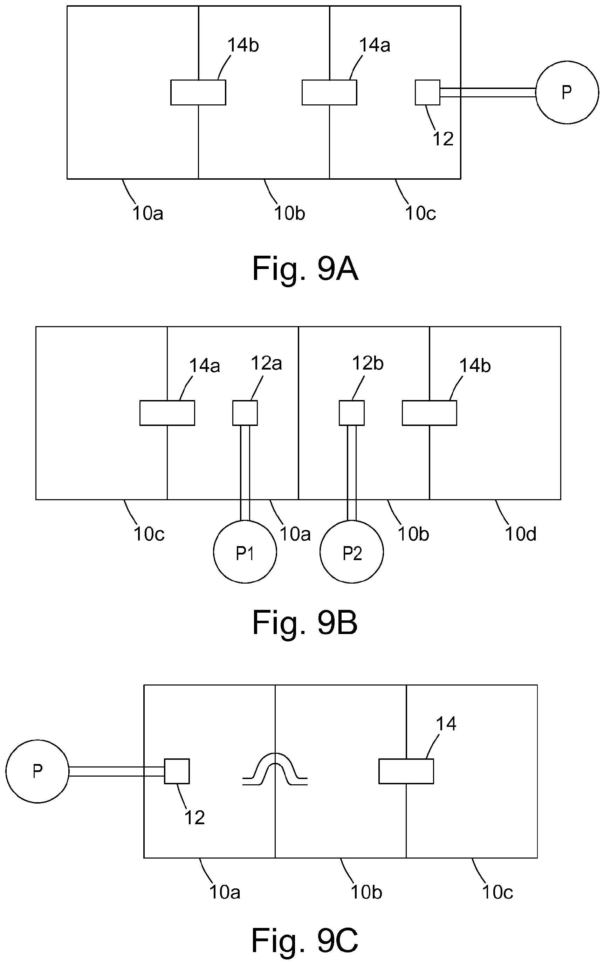

The modularity of the system developed to implement the assembly shown in Figure 1 will be described below. Due to the modularity of the system, a number of configurations different to those shown in Figure 1 could be implemented dependent on specific installation requirements. Some examples are discussed below in relation to Figures 9A-C.

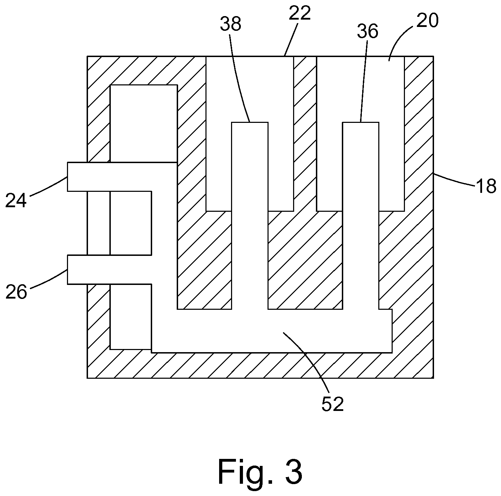

Figure 2 shows a power socket 16 for a drive 10. The power socket 16 is configured to receive power from an external power source and provide power to the control stage of the drive. The power socket 16 has a moulded plastics body 18. A suitable material is Nylon 66. Other suitably insulating materials could be used, such as moulded glass reinforced plastic (GRP), to equal effect. The body 18 comprises the electrical connections required to receive power from an external source and provide power to the control stage of the drive 10, as will be explained below in relation to Figure 3. The body 18 has first and second sockets 20, 22 defined in it, through which power can be supplied to the control stage. The sockets 20, 22 each have a generally rectangular cross-sectional profile with a pair of curved corners opposite a pair of substantially right-angled corners. Each socket 20, 22 has two electrical connectors for connection to a corresponding power supply plug, as will be explained. The sockets 20, 22 each have grooves (not shown) running down the interior face between the pair of curved corners. The grooves add rigidity to the body 18 and improve flow of material during moulding of the body 18.

The body 18 also comprises electrical pins 24, 26, 28, 30 for connection to a PCB of the drive. Other forms of electrical connection to the control stage of the drive could be used securing with non-soldered interfaces, such as screws or nut and bolt fastenings, but direct PCB soldering is typical in the industry. First electrical pins 24, 26 project through a first slot 32 formed in a side face of the body 18. Second electrical pins 28, 30 project through a second slot 34 formed in the side face of the body 18. The first and second slots 32, 34 are parallel to each other. The electrical pins are designed to carry power for the control stage of the drive 10 at 24 volts DC and consist of notionally supply and ground potential, as will be understood by the skilled person.

The power socket 16 also comprises first electrical connector prongs 36, 38 and second electrical connector prongs 40, 42. The first electrical connector prongs 36, 38 are present on a first side 44 of the power socket 16, aligned with the position of the first electrical pins 24, 26. One of the first electrical connector prongs is arranged in each of the first and second sockets 20, 22. The second electrical connector prongs 40, 42 are present on a second side 46 of the power socket 16, aligned with the position of the second electrical pins 28, 30. One of the second electrical connector prongs is arranged in each of the first and second sockets 20, 22. The components of the power socket 16 are electrically connected to each other, as will be explained below in relation to Figure 3.

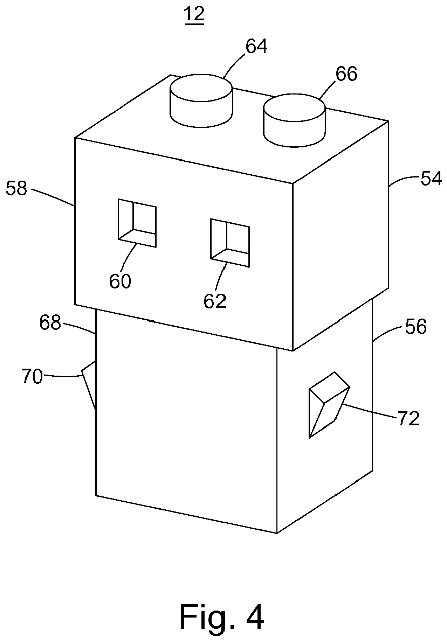

Two side slots 48, 50 are formed in a side face of the body 18. The side slots 48, 50 correspond to the positions of the sockets 20, 22. Each slot 48, 50 is for receipt of a latch element of a device that is inserted into the corresponding socket, as will be explained below in relation to Figures 4 to 7. Corresponding slots are also present on the opposite side of the body 18.

Figure 3 shows a cross-section through the first side 44 of the power socket 16, taken along the line A-A in Figure 2. The two sides 44, 46 have a similar structure. Therefore, it will be appreciated that the view shown in Figure 3 applies equally to the second side 46. In Figure 3, the first electrical connector prongs 36, 38 of the respective first and second sockets 20, 22 are electrically connected to each other and to the first electrical pins 24, 26 via an electrically conductive element 52. The first electrical connector prongs 36, 38, the first electrical pins 24, 26 and the conductive element 52 are formed as an integral piece by stamping or cutting from a suitably electrically conductive metal sheet, such as copper or brass. Alternatively, these components may be formed separately and joined together, for example by soldering or welding. The elements may be tin plated for protection against oxidation. A similar conductive element is present to connect the second electrical connector prongs 40, 42 and the second electrical pins 28, 30. The potentials of the electrical components of the first and second sides 44, 46 may be arranged to be at positive and negative potentials respectively.

With this configuration, power that is input to the power socket 16 via the first socket 20 or the second socket 22 can be supplied via the conductive elements to the first and second electrical pins 24, 26, 28, 30, and thus to the PCB of the drive. Similarly, power that is input to the power socket 16 via the first socket 20 can be supplied via the conductive elements to the electrical connectors of the second socket 22, and vice versa. The application of this will be explained below in relation to Figures 4 to 7.

Figure 4 shows a power supply plug 12 that can be used to connect power to the power socket 16 and thus provide power to modules of the drive 10. The power supply plug 12 can be inserted into either of the first and second sockets 20, 22 of the power socket 16. Where the drive 10 can only accept power to one of the sockets 20, 22 the profile of the sockets and respective complementary plugs may be different to prevent insertion of the power supply plug into the wrong socket.

The power supply plug 12 comprises a power input part 54 and a power output part 56. The power input part 54 comprises a housing 58 and first and second electrical input terminals 60, 62. In use, electrically conductive wires that are connected at one end to an external power source are inserted into the electrical input terminals 60, 62 to enable power to be supplied to the power supply plug 12 according to the specified rating for the drive 10. In this example, a potential of 24V is applied across the first electrical input terminal 60 and the second electrical input terminal 62. Each electrical input terminal 60, 62 has a corresponding machine screw 64, 66 to clamp the wires to the electrical input terminals 60, 62.

The power output part 56 has a housing 68 having a cross-sectional profile that corresponds to that of the first and second sockets 20, 22 of the power socket 16 such that the power output part 56 can be plugged into either the first or second socket 20, 22. The power output part 56 comprises a latch mechanism 70, 72 on each side of the housing 68. The latch mechanisms are arranged to slide along the side slots 48, 50 formed in the body 18 of the power socket 16, dependent on which of the sockets 20, 22 the power supply plug 12 is inserted into. The latch mechanisms have a generally triangular ramp profile. This provides a stop for engagement with a corresponding catch in the body 18 of the power socket 16. This removably holds the power supply plug 12 in place when installed. The housings 58 and 68 are also formed of plastic or other material, preferably Nylon 66, as above in respect of the power socket 16.

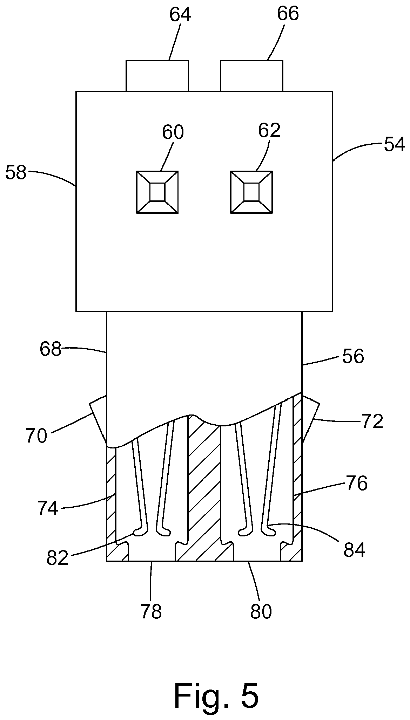

Figure 5 shows a front view of the power supply plug 12 with the front wall of the housing 68 of the power output part 56 partially cut away. The power output part 56 has first and second channels 74, 76 corresponding to the first and second electrical input terminals 60, 62 of the power input part 54. The first channel 74 leads from the first electrical input terminal 60 to a first aperture 78. The second channel 76 leads from the second electrical input terminal 62 to a second aperture 80. Each channel comprises sprung tines 82, 84 for contacting corresponding electrical connectors in the power socket 16. The tines 82, 84 are connected to corresponding electrical contacts (not shown) in their respective electrical input terminal 60, 62. The tines 82, 84 are formed of conductive metal, preferably copper. The copper may be tin plated.

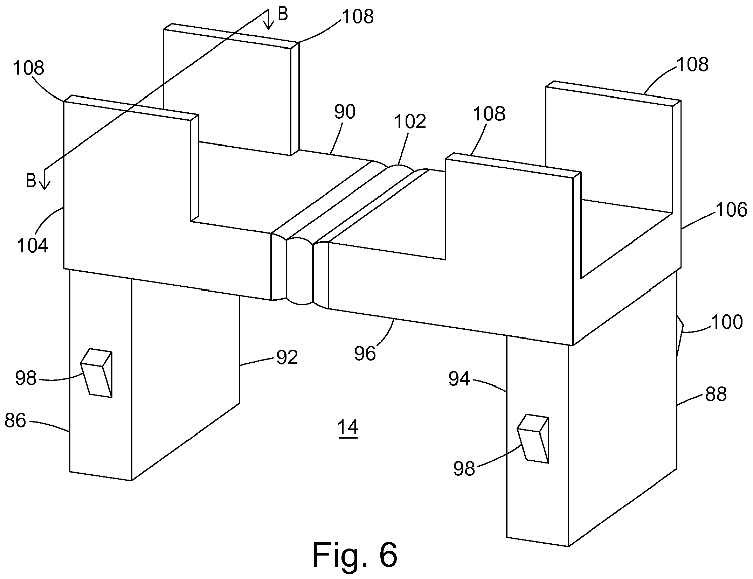

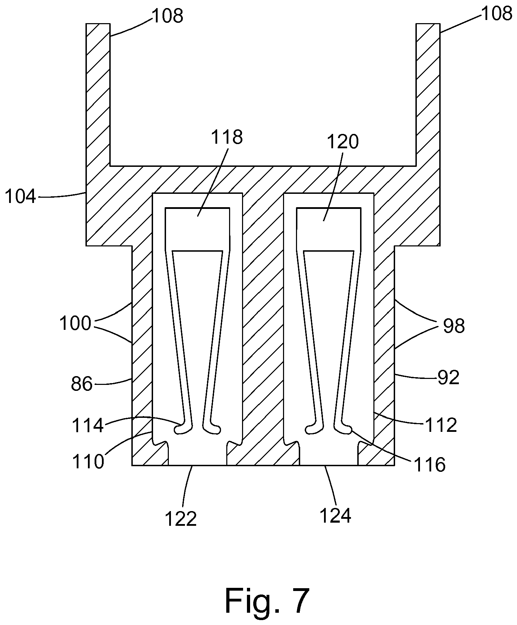

In operation, the power supply plug 12 is inserted into either the first or second socket 20, 22 to create electrical contact between the tines 82, 84 and the prongs 36, 40 or 38, 42. In the example shown in Figure 1, the power supply plug 12 is inserted into the first socket 20 of a power socket 16 of a first drive 10a. The first electrical connector prong 36 of the first socket 20 is inserted into the first aperture 78 and the second electrical connector prong 40 of the first socket 20 is inserted into the second aperture 80. The latch mechanism 70 slides down the side slot 48 corresponding to the first socket 20 and engages a corresponding catch to hold the power supply plug 12 in place. As discussed above, the generally triangular cross section of the latch mechanism 70 removably holds the power supply plug 12 in place when installed. The latch mechanism 72 slides down a side slot in the opposite side of the body 18 of the power socket 16. In this way, an electrical contact is made between the power supply plug 12 and the power socket 16. The PCB of the drive 10 can receive power from the external power source connected to the power supply plug 12. Similarly, power can be transmitted from the external power source to the first and second electrical connector prongs 38, 42 of the second socket 22. The application of this will be explained below in relation to Figures 6 and 7.

Figure 6 shows a connector 14 that can be used to transmit power across adjacent modular drives 10 arranged in a uniform and compact manner in a control box, as shown in Figure 1. The connector 14 comprises first and second connection elements 86, 88 joined by a bridging portion 90. The first and second connection elements 86, 88 each have a respective housing 92, 94. The bridging portion has a housing 96. The housings 92, 94 each have a cross-sectional profile that corresponds to that of the first and second sockets 20, 22 of the power socket 16 such that the first and second connection elements 86, 88 can be inserted into either the first or second socket 20, 22 of a power socket 16 in a pluggable manner. The first and second connection elements 86, 88 each comprise a latch mechanism 98, 100 on each side of their respective housing 92, 94. The latch mechanisms 98, 100 are similar to the latch mechanisms 70, 72 of the power supply plug 12. Because of the irregular section of the sockets 20, 22 and the complimentary shape of the connection elements 86, 88, the connection elements 86, 88 can only be plugged into the sockets 20, 22 in one way. This avoids a situation in which a connector 14 is installed in one socket 20, 22 and obscures the other. The profile of the sockets 20, 22 and connection elements 86, 88 may be rendered differently but according to the same principles if it is necessary to distinguish between power input and power transfer to an adjacent drive 10.

The bridging portion 90 has a length sufficient to reach from the power socket 16 of the first drive 10a to the power socket 16 of the second drive 10b, according to a uniform spacing of the sockets 16 on adjacent drives 10. Connectors 14 having bridging portions 90 of different lengths can be provided to account for different installation requirements. For example, an assembly of drives may include devices having different dimensions, for example if a given drive 10 has an extra module.

The bridging portion 90 has a flexible portion 102 substantially at its centre between two handle portions 104, 106. The flexible portion 102 has a generally concertina-type profile in this embodiment so that it provides the focus for any pitch, yaw or twist between the connection elements. The flexible portion 102 can also flex to increase or decrease the distance between the connection elements 86, 88 to accommodate a slightly wider or narrower spacing between adjacent drives as installed. The flexible portion 102 can flex sideways to accommodate any slight misalignment of the sockets 16 receiving the connection elements 86, 88. The flexible portion 102 can also bend to accommodate any variation in depth of the installation of the drive. In short, the flexible portion 102 enables the first and second connection elements 86, 88 to adjust relative to each other in three dimensions. This helps to account for any form of limited misalignment between adjacent drives 10 into which the connector 14 is inserted. The bridging portion 90 also has protruding pull tabs 108 on the handle portions 104, 106 which facilitate the manual insertion and removal of the connector 14. The housings 92, 94, 96 and pull tabs 108 are formed of a plastics or other flexible material, preferably Nylon 66 as above in respect of the power socket. However, in order to achieve sufficient flexibility, the connector 14 may be a composite of relatively rigid plastics (e.g. Nylon 66) bodies connected by a more easily flexible plastics bridge.

Figure 7 shows a cross-section through the first connection element 86, taken along the line B-B in Figure 6. The first and second connection elements 86, 88 have a similar structure. Therefore, it will be appreciated that the view shown in Figure 7 applies equally to the second connection element 88. The first connection element 86 has first and second channels 110, 112. Each channel comprises sprung tines 114, 116 connected to respective conductive elements 118, 120. The first and second conductive elements 118, 120 extend the length of the bridging portion 90 and are connected to corresponding tines in the second connection element 88. In this way, an electrical connection is provided between the first and second connection elements 86, 88 of the connector 14. The first channel 110 leads from the first conductive element 118 to a first aperture 122. The second channel 112 leads from the second conductive element 120 to a second aperture 124. The tines 114, 116 and the conductive elements 118, 120 are formed of conductive metal, preferably brass or copper. The brass or copper may be tin plated.

In the example shown in Figure 1, where the power supply plug 12 is inserted into the first socket 20 of a power socket 16 of a first drive 10a, when installed, the first connection element 86 is inserted into the second socket 22 of the power socket 16 of the first drive 10a. In this example, the latch mechanism 100 slides down the slot 50 corresponding to the second socket 22 and engages a corresponding catch to removably hold the first connection element 86 in place. The latch mechanism 98 slides down a side slot in the opposite side of the body 18 of the power socket 16. The first electrical connector prong 38 of the second socket 22 is inserted into the first aperture 122. The second electrical connector prong 42 of the second socket 22 is inserted into the second aperture 124. In this way, electrical contact is created between the tines 114, 116 and the prongs 38, 42. Therefore, an electrical contact is made between the first connection element 86 and the power socket 16. Power can then be transmitted from the power supply plug 12 to the connector 14 via the power socket 16 of the first drive 10a.

Following the example of Figure 1, the second connection element 88 can be connected to the first socket 20 of a power socket 16 of a second drive 10b. An electrical contact is then made between the tines 114, 116 in the second connection element 88 and the power socket 16 of the second drive 10b. In this way, the power socket 16 of the second drive 10b can receive power from the connector 14. As such, power can be transmitted from the power supply plug 12 to the power socket 16 of the second drive 10b via the power socket 16 of the first drive 10a and the connector 14. The PCB of the second drive 10b is therefore supplied with power without the need to be wired to an external power supply.

In a similar manner, a second connector 14 could be used to link the second drive 10b to a third drive 10c, as shown in Figure 1, thus supplying power to the PCB of the third drive 10c. Further drives and connectors could be added within allowable resistance and current limits to provide power to a bank of drives from a single power input (supplied by the power supply plug 12 inserted into the power socket 16 of a first drive 10a).

Due to the correspondence between the structures of the first and second sockets 20, 22 of the power socket 16, the power output part 56 of the power supply plug 12 and the first and second connection elements 86, 88 of the connector 14, the system is modular and can be assembled in a number of different ways dependent on specific installation requirements, as shown in Figure 1 and Figures 9A-C.

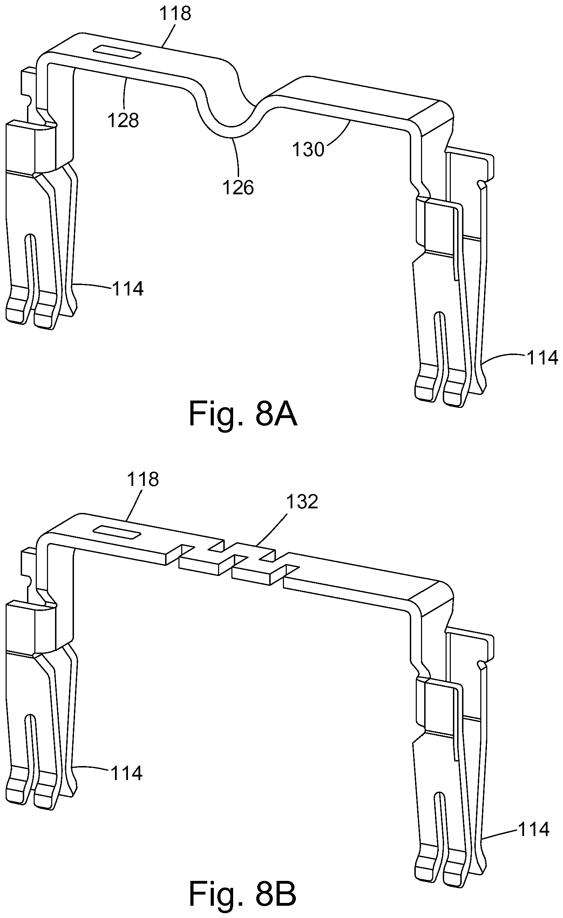

Figure 8A shows the assembly of the first conductive element 118 with the first set of sprung tines 114 of each of the first and second connection elements 86, 88. The first and second conductive elements 118, 120 have a similar structure. Therefore, it will be appreciated that the view shown in Figure 8A applies equally to the second conductive element 120. The first conductive element 118 comprises a bend 126 substantially at its centre, defining a point of flexure between two substantially flat portions 128, 130. The flat portions 128, 130 are aligned, with the bend 126 between. The position of the bend 126 is coincident with to the position of the flexible portion 102 of the assembled connector 14. The structure of the bend 126 provides flexibility that allows the two ends of the first conductive element 118 to move relative to each other without the electrical connection being broken. Similarly to the flexible portion 102, the bend 126 can flex sideways and bend to enable the first and second connection elements 86, 88 to adjust relative to each other in three dimensions. This ensures that, if the first and second connection elements 86, 88 move relative to each other to account for any misalignment between adjacent drives 10, the electrical connection between the first and second connection elements 86, 88 is maintained. The thickness of the bend 126 is the same as that of the flat portions 128, 130 for ease of manufacture. It will be appreciated that the thickness of the bend 126 could be less than that of the flat portions 128, 130 for added flexibility. This structure provides a conductive element 118 that is simple to manufacture and has good current carrying capacity with an acceptable temperature rise in operation. The bend 126 preferably has some resilience such that it can revert to its original form and the connector 14 can be reused.

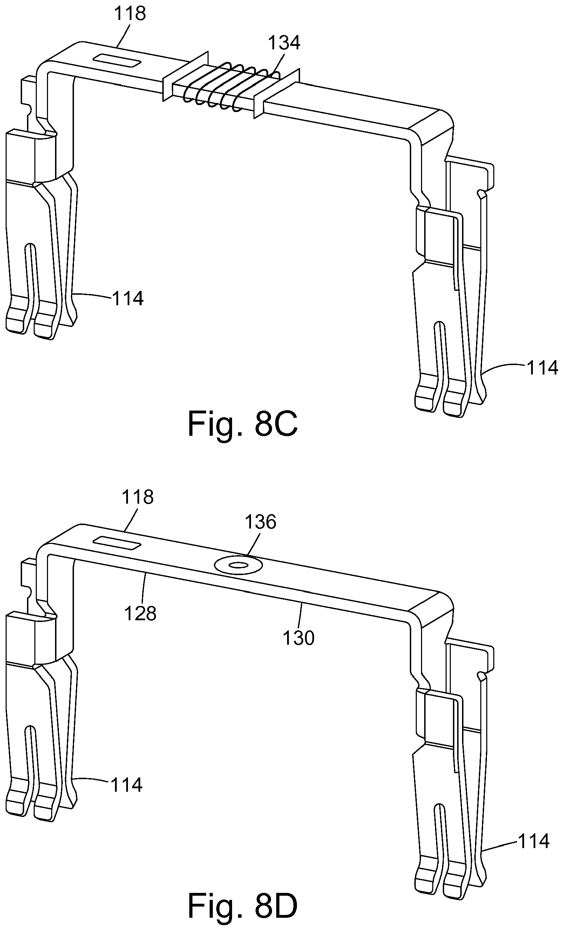

The flexibility of the conductive elements 118, 120 could be achieved in a number of ways. In one example, the bend could be a flexible section 132 orthogonal to that in bend 126 above with a stepped profile, as shown in Figure 8B. Alternatively, the flexible portion 132 could be implemented using a bend with a relatively thinner portion than the conductive elements, a bend 126 made of a more flexible material, for example spring steel, or a wire joining the flat portions 128, 130. Each of these examples would enable flexibility in three dimensions. In another example, the conductive elements 118, 120 could include a sprung sliding contact 134, as shown in Figure 8C. This would allow flexibility in a direction parallel to the length of the connector 14. In another example, the conductive elements 118, 120 could include rotating portion 136 as shown in Figure 8D. In this case, the flat portions 128, 130 could be fixed together with a riveted or bolted joint, which can provide increased rotational movement between the two ends of the conductive elements 118, 120. In another form the flexible portion comprises two flat elongate portions of conductor spanned by a further elongate portion with a concertina profile and also twisted by 90 degrees. Whilst reducing the cross-sectional area of the conductive elements 118, 120 would affect the current carrying capacity, each of these examples may offer further flexibility if required for a particular application.

The connector 14 provides an adjustable device for connecting adjacent drives 10 in a scalable and efficient manner. The flexibility of the connector 14 enables the successful connection of drives 10 that may be misaligned. The disclosed system significantly simplifies the connection of a bank of drives 10. Only a single pair of wires is required to link each component of the system to an external power supply. Fewer wires means a control box for the bank of drives 10 is less cluttered. The pluggable nature of the power supply plug 12 and connectors 14 into the power socket 16 allows a scalable modular installation, thus allowing a number of different configurations to be implemented. This gives adaptability to local conditions, such as availability of space and power supplies. This also results in easier diagnosis of failure and repair as the components of the system can be easily detached from each other when necessary. The simplicity of installation significantly reduces the chances of errors in wiring multiple adjacent drives.

Figure 9A-C show configurations of an assembly of drives different to those shown in Figure 1. These are example configurations that show the adaptability of the system. It will be appreciated that further configurations could be implemented using the disclosed power supply system.

Figure 9A shows an assembly of drives 10a-c where the power is supplied from an external power source P located at the other end of the assembly to that shown in Figure 1. In this case, the third drive 10c is connected to the external power source P. This connection is provided by a power supply plug 12 connected to the external power source P and plugged into the third drive 10c. A first connector 14a is plugged into the third drive 10c and the second drive 10b. A second connector 14b is plugged into the second drive 10b and the first drive 10a. Power may be supplied from the external power source P, via the power supply plug 12 and the connectors 14a-b, to a PCB of each of the drives 10a-c in the opposite sense to that shown in Figure 1. Similarly, the chain could continue within allowable resistance and current limits.

Figure 9B shows four drives 10a-d are arranged alongside each other. The first drive 10a is connected to a first external power source P1. The second drive 10b is connected to a second external power source P2. The external power sources P1 and P2 could be the same external power source. These connections are provided by power supply plugs 12a, 12b connected to the external power sources P1, P2 and plugged into the first and second drives 10a-b respectively. A first connector 14a is plugged into the first drive 10a and the third drive 10c. A second connector 14b is plugged into the second drive 10b and the fourth drive 10d. In this way, power may be supplied from the external power sources P1, P2, via the power supply plugs 12a-b and connectors 14a-b, to a PCB of each of the drives 10a-d. The chain could continue in either direction within allowable resistance and current limits.

Figure 9C shows an assembly similar to that of Figure 1, although in this case the first drive 10a is directly wired to the second drive 10b. This configuration could be employed where the arrangement of drives is not compatible with the dimensions of available connectors. A first connector 14a is plugged into the second drive 10b and the third drive 10c. Similarly to Figure 1, power may be supplied from the external power source P to a PCB of each of the drive 10a-c. The chain could continue within allowable resistance and current limits.

The following aspects and embodiments are disclosed:
1. A connector for electrically connecting a first control module to a second control module, the connector comprising:
   a connector body having a first part supporting a first connecting element configured to be connectable to the first control module and a second part supporting a second connecting element configured to be connectable to the second control module;
   wherein the first and second connecting elements are electrically connected and the connector body comprises a flexible portion linking the first and second parts.
2. The connector of item 1, wherein the flexible portion is configured to enable movement between the first and second connecting elements to accommodate variations in position between the control modules.
3. The connector of item 2, wherein the accommodated variation comprises a direction parallel to the length of the connector.
4. The connector of item 2 or 3, wherein the accommodated variation comprises a direction parallel to the width of the connector.
5. The connector of any of items 2 to 4, wherein the accommodated variation comprises angular variations.
6. The connector of any preceding item, wherein the flexible portion has a concertina structure.
7. The connector of any preceding item, wherein the first and second connecting elements are electrically connected by a conductive element comprising an adjustable part.
8. The connector of item 7, wherein the adjustable part is substantially at the centre of the conductive element.
9. The connector of item 7 or 8, wherein the conductive element is generally flat and the flexible part comprises a bend out of the plane of the conductive element.
10. The connector of any of items 7, 8 or 9 in which the connector body is made of a moulded plastics material.
11. The connector of item 10 in which the adjustable part of the conductive element is embedded in the moulded plastics material.
12. The connector of any preceding item, wherein the first and second connecting elements each comprise a latch element for holding the connector in place in one of the control modules.
13. The connector of any preceding item, wherein the first and second connecting elements each comprise a casing part and at least one electrical connection within the casing part.
14. The connector of any preceding item, further comprising a pull tab for manual removal of the connector once installed.
15. An assembly of control modules comprising:
   first and second control modules arranged in a side-by-side relationship, and
   each formed to receive a connector as in any of items 1 to 14 to transfer power between the modules.
16. A power socket for a control module, the power socket comprising a casing;
   first and second sockets disposed in the casing, the first and second connectors configured to receive and/or transmit electrical power; and
   at least one electrical conductor between the first and second sockets for transmitting electrical power between the first and second sockets.
17.The power socket of item 16, wherein the first socket comprises first and second electrical connectors and the second socket comprises third and fourth electrical connectors.
18.The power socket of item 17, wherein:
   the at least one electrical conductor comprises first and second electrical conductors;
   the first electrical conductor electrically connects the first and third electrical connectors; and
   the second electrical conductor electrically connects the second and fourth electrical connectors.
19.The power socket of item 18 wherein the first and third electrical connectors are configured to be operated a lower electrical potential than the second and fourth electrical connectors.
20.The power socket of any of items 16 to 19, wherein the first and second sockets have a cross-sectional profile in a plane perpendicular to the principal axis of the sockets, such that a device to be received in the socket can only be inserted in one orientation.
21.The power socket of any of items 16 to 20, wherein the first and second sockets are configured to receive a power supply apparatus.
22.The power socket of any of items 16 to 21, wherein the first and second sockets are configured to receive a power output apparatus.
23.The power socket of item 21 or 22, wherein the first and second sockets each comprise at least one slot for receiving a corresponding locating element of a received apparatus.
24.The power socket of any of items 16 to 23 wherein, in use, the first socket receives electrical power from an external source and the second socket supplies electrical power to an external apparatus.
25.The power socket of any of items 16 to 24, wherein the electrical conductor is configured to transmit electrical power to a PCB of the control module.
26. The power socket of any of items 16 to 25, wherein the casing is made of a moulded plastics material.

## Claims

1. A connector for electrically connecting a first control module to a second control module, the connector comprising:
a connector body having a first part supporting a first connecting element configured to be connectable to the first control module and a second part supporting a second connecting element configured to be connectable to the second control module;
wherein the first and second connecting elements are electrically connected and the connector body comprises a flexible portion linking the first and second parts.

2. The connector of claim 1, wherein the flexible portion is configured to enable movement between the first and second connecting elements to accommodate variations in position between the control modules, optionally wherein the accommodated variation comprises one or more of: variation in a direction parallel to the length of the connector; variation in a direction parallel to the width of the connector; and angular variation.

3. The connector of 1 or 2, wherein the flexible portion has a concertina structure.

4. The connector of any preceding claim, wherein the first and second connecting elements are electrically connected by a conductive element comprising an adjustable part, optionally wherein the adjustable part is substantially at the centre of the conductive element.

5. The connector of claim 4, wherein the conductive element is generally flat and the adjustable part comprises a bend out of the plane of the conductive element.

6. The connector of claim 4 or 5 in which the connector body is made of a moulded plastics material, optionally wherein the adjustable part of the conductive element is embedded in the moulded plastics material.

7. The connector of any preceding claim, wherein the first and second connecting elements each comprise one or more of a latch element for holding the connector in place in one of the control modules; a casing part and at least one electrical connection within the casing part.

8. The connector of any preceding claim, further comprising a pull tab for manual removal of the connector once installed.

9. An assembly of control modules comprising:
first and second control modules arranged in a side-by-side relationship, and
each formed to receive a connector as claimed in any of claims 1 to 8 to transfer power between the modules.

10. A power socket for a control module, the power socket comprising
a casing optionally made of a moulded plastics material;
first and second sockets disposed in the casing, the first and second sockets configured to receive and/or transmit electrical power; and
at least one electrical conductor between the first and second sockets for transmitting electrical power between the first and second sockets.

11. The power socket of claim 10, wherein the first socket comprises first and second electrical connectors and the second socket comprises third and fourth electrical connectors, optionally wherein:
the at least one electrical conductor comprises first and second electrical conductors;
the first electrical conductor electrically connects the first and third electrical connectors; and
the second electrical conductor electrically connects the second and fourth electrical connectors, further optionally wherein the first and third electrical connectors are configured to be operated a lower electrical potential than the second and fourth electrical connectors.

12. The power socket of claim 10 or 11, wherein the first and second sockets have a cross-sectional profile in a plane perpendicular to the principal axis of the sockets, such that a device to be received in the socket can only be inserted in one orientation.

13. The power socket of any of claims 10 to 12, wherein the first and second sockets are configured to receive a power supply apparatus and/or a power output apparatus.

14. The power socket of claim 13, wherein the first and second sockets each comprise at least one slot for receiving a corresponding locating element of a received apparatus.

15. The power socket of any of claims 10 to 14 wherein, in use, the first socket receives electrical power from an external source and the second socket supplies electrical power to an external apparatus and/or wherein the electrical conductor is configured to transmit electrical power to a PCB of the control module.
